# EUROPEAN PATENT SPECIFICATION

(11) **EP 3 252 319 B1**
(45) Date of publication and mention of the grant of the patent: **03.03.2021**
(21) Application number: 17172917.1
(22) Date of filing: 25.05.2017
(51) Int. Cl.: F15B 15/14, B23K 9/04, F16J 10/02, B23K 101/00, B23K 9/028

(54) **METHOD OF ASSEMBLING A PISTON-CYLINDER GROUP THROUGH LOW TEMPERATURE WELDING**
VERFAHREN ZUR MONTAGE EINER KOLBEN-ZYLINDER-GRUPPE DURCH NIEDRIGER TEMPERATUR SCHWEISSEN
PROCÉDÉ D'ASSEMBLAGE D'UN GROUPE CYLINDRE-PISTON EN UTILISANT UN SOUDAGE BASSE TEMPÉRATURE

(30) Priority: 03.06.2016 IT UA20164077
(43) Date of publication of application: 06.12.2017
(73) Proprietor: OGNIBENE POWER S.P.A., 42124 Frazione Mancasale (RE) (IT)
(72) Inventor: OGNIBENE, Claudio, 42121 REGGIO EMILIA (IT)
(74) Representative: Corradini, Corrado

(56) References cited:
- WO-A1-03/097269
- WO-A1-2004/039529
- CN-A- 105 090 160
- DE-B3-102013 008 351
- JP-A- 2011 200 903

## Description

### TECHNICAL FIELD

The present invention relates to a method of assembling a piston-cylinder group according to the preamble of claim 1 (see for example CN 10 509 01 60 A).

### PRIOR ART

Piston-cylinder groups are known comprising a cylinder in which a stem is housed.

The cylinder is closed at an end thereof by a base to which it is joined by a circumferential weld and has at an opposite end thereof a head to which it is joined by a further circumferential welding.

In a known assembly method of the piston-cylinder group, the head is welded to an end of the cylinder without seal gaskets by means of a conventional welding process and in a second operation the seal gaskets and the stem are inserted and lastly the base is welded to the other end of the cylinder.

This process is followed since the high heat levels caused by the welding operation must be dissipated before inserting the seal gasket, which is generally made of a thermoplastic material, with the purpose of preventing damage thereto.

One of the drawbacks of this known assembly process is that it involves long working times with consequent negative repercussions on production costs.

An aim of the present invention is to provide an assembly method of a piston-cylinder group which enables rapid execution times, with consequent savings on associated costs.

A method of assembling a piston-cylinder group according to the present invention is defined in claim 1. The dependent claims delineate preferred particularly advantageous aspects of the invention.

### DESCRIPTION OF THE INVENTION

The invention in particular relates to a method of assembling a piston-cylinder group, where the piston-cylinder group comprises a cylinder at an end of which a head is fixable, provided with seal gaskets, see claim 1.

An advantage of this solution is given by the fact that it enables welding the head to the cylinder with the seal gaskets already inserted in position, maintaining sufficiently low temperatures for avoiding damage thereto. In an aspect of the invention a low-temperature welding step is included of a base to an end of the cylinder not coupled to the head.

In an aspect of the invention the low-temperature weld between the cylinder and the head and the low-temperature weld between the cylinder and the base are carried out in parallel.

An advantage of this solution is that it enables realising the piston-cylinder group with a rapid and economical process.

Further characteristics of the invention can be derived from the dependent claims.

### BRIEF DESCRIPTION OF THE DRAWINGS

Further characteristics and advantages of the invention will emerge from a reading of the following description, provided by way of non-limiting example with the aid of the figures illustrated in the appended tables of drawings, in which:
figure 1 is an axonometric view of a piston-cylinder group;
figure 2 is a section view of the piston-cylinder group of figure 1;
figure 3 is a partly-sectioned lateral view of the piston-cylinder group of figure 1;
figure 4 is a detail in section of the head of the piston-cylinder group of figure 1;
figure 5 is a detail in section of the base of the piston-cylinder group of figure 1;
figure 6 is a larger-scale detail, in section, of figure 4, and
figure 7 is a block diagram that illustrates the main steps of the assembly method of the piston-cylinder group.

### DETAILED DESCRIPTION OF THE FIGURE

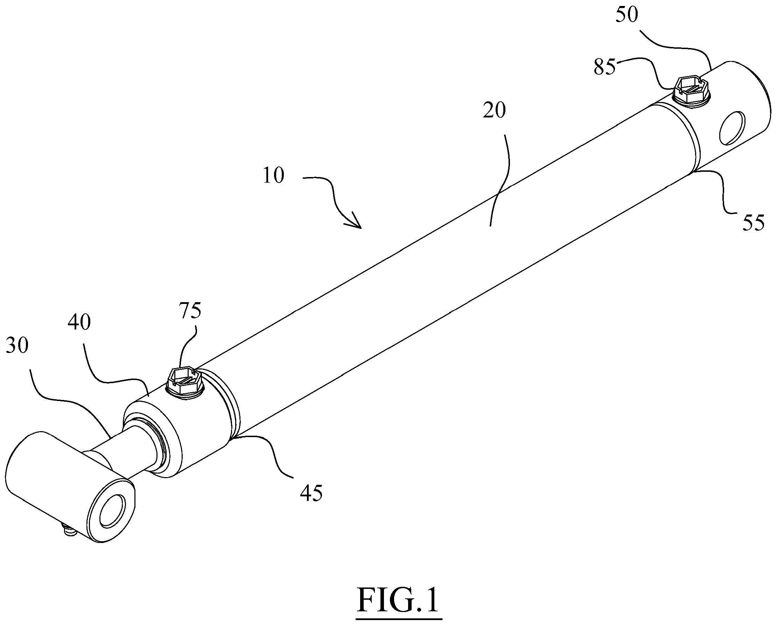

With particular reference to figure 1, reference numeral 10 denotes in its entirety the piston-cylinder group, which comprises a cylinder 20 in which a stem 30 is housed, an end of which projects from the cylinder through a hole provided in a head 40. In particular the cylinder 20 is closed at an end thereof by a base 50 to which it is joined by a circumferential weld 55 and has at an opposite end 40 thereof a head to which it is joined by a further circumferential weld 45.

A piston 60 is fixed to an end of the stem 30, which can slide between a proximal position to the base 50 of the cylinder 20 to a position proximal to the head 40 of the cylinder 20.

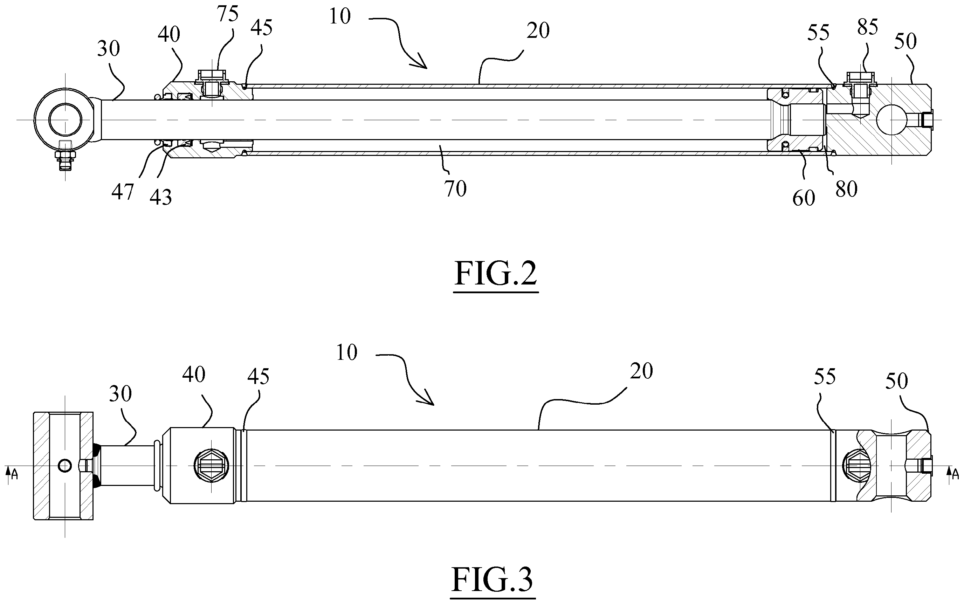

In particular, the piston 60 can slide internally of the cylinder 20. Further, the piston 60 divides the internal volume of the cylinder into two chambers 70 and 80, each of which is supplied with fluid, for example oil, through a conduit denoted respectively by 75 and 85 (figures 2 and 3).

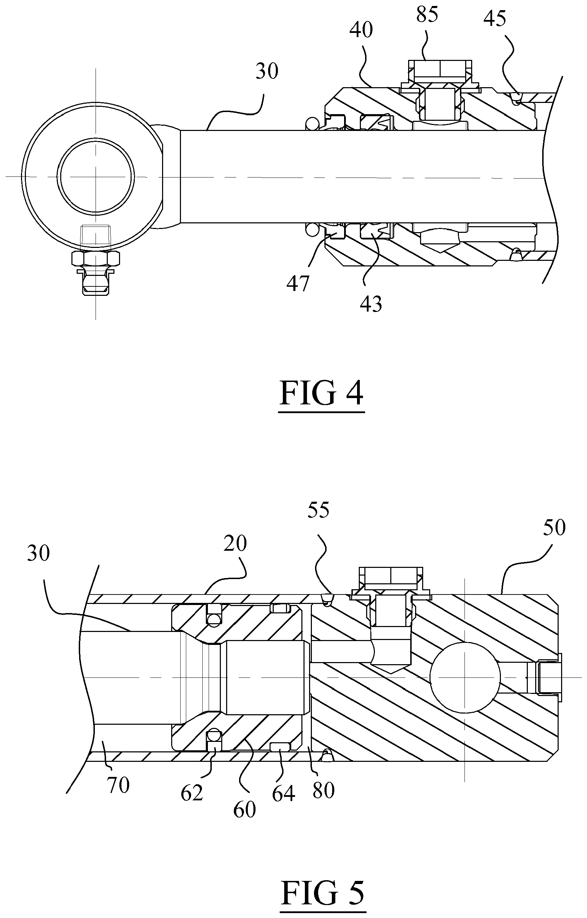

According to the present invention and with reference to figure 5, the piston 60 has on a lateral surface thereof two annular seatings, wherein one of the annular seatings a seal gasket 62 is housed, while a guide ring 64 is housed in the other annular seating.

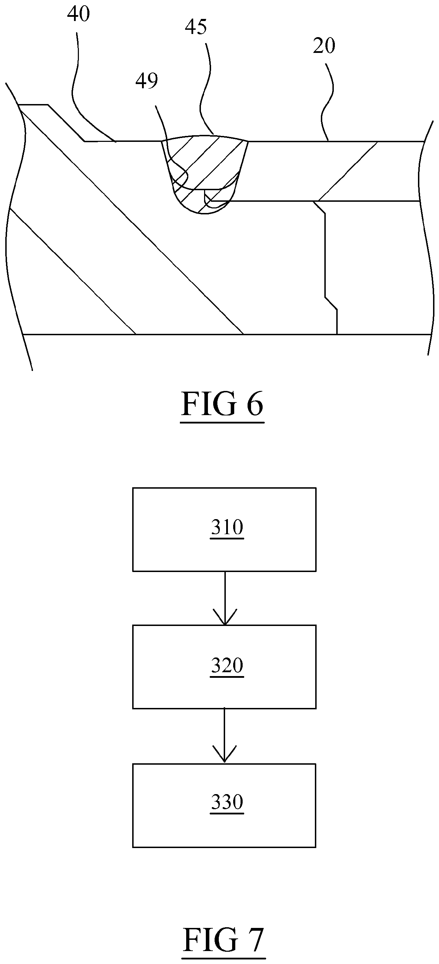

According to the present invention and with reference to figure 4, the head 40 has on the internal surface thereof two annular seatings, where a seal gasket 43 is housed in one of the annular seatings, while a scraper ring 47 is housed in the other annular seating. Lastly, figure 6 is a larger-scale detail, in section, of figure 4, where a caulking 49 can be seen.

According to the present invention, the circumferential weld 45 which joins the cylinder 20 to the base 40 and/or the circumferential weld 55 joining the cylinder 20 to the head 50 are realised by low-temperature welding carried out by cold metal transfer (CMT).

The welding process, which is of known type, is defined by the alternation of an "arc" step and a "short-circuit" transfer step.

During the arc step, the metal wire is neared to the piece to be welded and fused by means of an arc of current. At the moment when the metal wire fuses and the metal begins falling towards the welding puddle, the short-circuit step begins in which the arc of current is reduced and the metal wire is distanced from the workpiece.

The distancing of the wire from the workpiece facilitates detachment of drops of fused metal from the wire and deposits them in the welding puddle. This method therefore enables obtaining a welding process that is highly controllable, is low-temperature and reduces the energy used during the working process.

Figure 7 is a block diagram that illustrates the main steps of the assembly method of the piston-cylinder group 10.

In a first assembly step (block 310) all the components of the piston-cylinder group are assembled.

The piston 60 is provided with the seal gasket 62 and the guide ring 64, while the seal gasket 43 and the scraper 47 are positioned in the appropriate annular seatings of the head 40.

The piston 60 is coupled with the stem 30 and inserted internally of the cylinder 20 at the ends of which the head 40 and the base 50 are positioned.

Once all the components are assembled, the piston-cylinder group 10 is positioned on a welding template and the piston 60 is positioned at the centre of the cylinder 20 (block 320) with the aim of distancing the seal gaskets 62 from the weld joints.

When the piston-cylinder group 10 is positioned on the welding template the low-temperature welding step is begun (block 330).

The welding is performed at the join between the cylinder 20 and the base 50 and the join between the cylinder 20 and the head 40.

In a further embodiment of the invention, only the weld 45 between the cylinder 20 and the head 50 is realised by low-temperature welding carried out by cold metal transfer CMT, while the weld 55 between the cylinder 20 and the base 50 is carried out by means of another known welding method.

In a further embodiment of the invention, both welds 45 and 55 can be done using CMT. In this particular embodiment the welds can be carried out in succession by use of a single hot wire, or contemporaneously by use of two hot wires which work in parallel on the profiled elements to be welded.

At the end of the low-temperature welding, the piston-cylinder group 10 can be positioned on a bench where thermocouples are present, usable for controlling the cooling of the piston-cylinder group.

According to the present invention, the seal gaskets 43 and 62 are mounted in the destination position thereof, before the welding step, since by using the described method, the welding temperature does not exceed 65°C and the integrity of the seal gaskets is preserved.

The present invention is also applicable to piston-cylinder groups having a through-stem where a head 40 provided with seal gaskets 43 is fixed to both ends of the cylinder 20. In this case the piston is fixed at the halfway line of the stem and both the ends of the stem project from the cylinder through holes afforded in the heads 40.

The invention as it is conceived is susceptible to numerous modifications, all falling within the scope of the present invention as defined in the appended claims.

Further, all the details can be replaced with other technically-equivalent elements.

In practice the materials used, as well as the contingent shapes and dimensions, can be any according to requirements, without forsaking the scope of protection of the following claims.

## Claims

1. A method of assembling a piston-cylinder group (10), where the piston-cylinder group (10) comprises:
- a cylinder (20),
- a head (40) which is fixable at an and of the cylinder (20),
- a stem (30) to which a piston (60) is coupled,
wherein the stem (30) which is housed in the cylinder (20) and has an end which projects from the cylinder (20) through a hole provided in the head (40), the head (40) having on the internal surface thereof two annular seatings, wherein a seal gasket (43) is housed in one of the annular seatings, while a scraper ring (47) is housed in the other annular seatings, and
the piston (60) having on a lateral surface thereof two annular seatings, wherein in one of the annular seatings a seal gasket (62) is housed and a guide ring (64) is housed in the other annular seating,
the method comprising steps of:
- providing the piston (60) with the seal gasket (62) and the guide ring (64),
- mounting the seal gaskets (43) and the scraper ring (47) in the appropriate annular seatings in the head (40);
- inserting the piston (60) in the cylinder (20), and
- coupling the head (40) with the cylinder (20);
said method being **characterized by** the fact of comprising the step of:
- welding by means of a low-temperature welding carried out by cold metal transfer (CMT) of the coupling between the head (40) and the cylinder (20) with the seal gaskets already inserted in position and the piston already inserted in the cylinder.

2. The method of claim 1, comprising a low-temperature welding step of a base (50) to an end of the cylinder (20) not coupled to the head (40).

3. The method of claim 2, wherein the low-temperature weld (45) between the cylinder (20) and the head (40) and the low-temperature weld (55) between the cylinder (20) and the base (50) are carried out in parallel.

4. The method of claim 1, wherein the stem (30) is inserted in the cylinder (20) in such a way that the piston (60) is in a substantially central position internally of the cylinder (20) before carrying out the low-temperature welding operations.

5. The method of claims 1 or 2, wherein the temperature at which the welds are carried out does not exceed 65 °C.

## Patentansprüche

1. Verfahren zum Montieren einer Kolben-Zylinder-Gruppe (10), wobei die Kolben-Zylinder-Gruppe (10) Folgendes umfasst:
- einen Zylinder (20),
- einen Kopf (40), der an einem Ende des Zylinders (20) befestigbar ist,
- eine Stange (30), an die ein Kolben (60) gekoppelt ist,
wobei die Stange (30) in dem Zylinder (20) aufgenommen ist und ein Ende aufweist, das aus dem Zylinder (20) durch ein in dem Kopf (40) vorgesehenes Loch herausragt, wobei der Kopf (40) an seiner Innenfläche zwei ringförmige Sitze aufweist, wobei eine Dichtung (43) in einem der ringförmigen Sitze aufgenommen ist, während ein Abstreifring (47) in dem anderen ringförmigen Sitz aufgenommen ist, und
wobei der Kolben (60) an einer seiner Seitenflächen zwei ringförmige Sitze aufweist, wobei in einem der ringförmigen Sitze eine Dichtung (62) aufgenommen ist und in dem anderen ringförmigen Sitz ein Führungsring (64) aufgenommen ist, wobei das Verfahren folgende Schritte umfasst:
- Versehen des Kolbens (60) mit der Dichtung (62) und dem Führungsring (64),
- Einsetzen der Dichtungen (43) und des Abstreifrings (47) in die geeigneten ringförmige Sitze im Kopf (40);
- Einführen des Kolbens (60) in den Zylinder (20), und
- Koppeln des Kopfes (40) mit dem Zylinder (20);
wobei das Verfahren **dadurch gekennzeichnet ist, dass** es folgenden Schritt umfasst:
- Schweißen der Verbindung zwischen dem Kopf (40) und dem Zylinder (20) mittels einer Niedertemperaturschweißung, die durch Kaltmetalltransfer (CMT) durchgeführt wird, wobei die Dichtungen bereits in Position eingesetzt sind und der Kolben bereits in den Zylinder eingesetzt ist.

2. Verfahren gemäß Anspruch 1, umfassend einen Niedertemperaturschweißschritt eines Bodens (50) an einem Ende des Zylinders (20), das nicht mit dem Kopf (40) gekoppelt ist.

3. Verfahren gemäß Anspruch 2, wobei die Niedertemperaturschweißung (45) zwischen dem Zylinder (20) und dem Kopf (40) und die Niedertemperaturschweißung (55) zwischen dem Zylinder (20) und dem Boden (50) parallel durchgeführt werden.

4. Verfahren gemäß Anspruch 1, wobei die Stange (30) so in den Zylinder (20) eingeführt wird, dass sich der Kolben (60) vor der Durchführung der Niedertemperaturschweißvorgänge in einer im Wesentlichen mittigen Position innerhalb des Zylinders (20) befindet.

5. Verfahren gemäß Anspruch 1 oder 2, wobei die Temperatur, bei der die Schweißungen durchgeführt werden, nicht mehr als 65 °C beträgt.

## Revendications

1. Procédé d'assemblage d'un groupe piston-cylindre (10), où le groupe piston-cylindre (10) comprend :
- un cylindre (20),
- une tête (40) qui est fixable au niveau d'une extrémité du cylindre (20),
- une tige (30) à laquelle un piston (60) est couplé,
où la tige (30) qui est logée dans le cylindre (20) et a une extrémité qui fait saillie depuis le cylindre (20) à travers un trou prévu dans la tête (40), la tête (40) ayant sur sa surface intérieure deux sièges annulaires, où un joint d'étanchéité (43) est logé dans un des sièges annulaires, tandis qu'un segment racleur (47) est logé dans les autres sièges annulaires, et
le piston (60) ayant sur une surface latérale de celui-ci deux sièges annulaires, où dans un des sièges annulaires un joint d'étanchéité (62) est logé et une bague de guidage (64) est logée dans l'autre siège annulaire,
le procédé comprenant les étapes de :
- fourniture du piston (60) avec le joint d'étanchéité (62) et la bague de guidage (64),
- montage des joints d'étanchéité (43) et du segment racleur (47) dans les sièges annulaires appropriés dans la tête (40) ;
- insertion du piston (60) dans le cylindre (20), et
- couplage de la tête (40) avec le cylindre (20) ;
ledit procédé étant **caractérisé par** le fait de comprendre l'étape de :
- soudure au moyen d'une soudure à basse température réalisée par un transfert de métal à froid (GMT) du couplage entre la tête (40) et le cylindre (20) avec les joints d'étanchéité déjà en place et le piston déjà inséré dans le cylindre.

2. Procédé selon la revendication 1, comprenant une étape de soudure à basse température d'une base (50) à une extrémité du cylindre (20) non couplée à la tête (40).

3. Procédé selon la revendication 2, où la soudure à basse température (45) entre le cylindre (20) et la tête (40) et la soudure à basse température (55) entre le cylindre (20) et la base (50) sont réalisées en parallèle.

4. Procédé selon la revendication 1, où la tige (30) est insérée dans le cylindre (20) de manière à ce que le piston (60) est dans une position considérablement centrale intérieurement au cylindre (20) avant la réalisation des opérations de soudure à basse température.

5. Procédé selon les revendications 1 ou 2, où la température à laquelle les soudures sont réalisées n'excède pas 65 °C.
